# EUROPÄISCHE PATENTSCHRIFT

(11) **EP 1 262 369 B1**
(45) Veröffentlichungstag und Bekanntmachung des Hinweises auf die Patenterteilung: **25.04.2007**
(21) Anmeldenummer: 02012018.4
(22) Anmeldetag: 31.05.2002
(51) Int. Cl.: B60R 1/00

(54) **Nachtsichteinrichtung für Fahrzeuge**
Night vision device for vehicles
Dispositif de vision nocturne pour véhicule

(30) Priorität: 01.06.2001 DE 10126683
(43) Veröffentlichungstag der Anmeldung: 04.12.2002
(73) Patentinhaber: Hella KGaA Hueck & Co., 59552 Lippstadt (DE)
(72) Erfinder: Abel, Björn, 32107 Bad Salzuflen (DE); Stallein, Lambertus, 33129 Delbrück (DE); Burg, Michael, 59557 Lippstadt (DE); Mühlenberg, Martin, 59494 Soest (DE)

(56) Entgegenhaltungen:
- WO-A-01/02892
- DE-A1- 3 932 216
- US-A- 5 729 016
- US-A- 5 949 331
- US-A- 6 116 639

## Beschreibung

Die Erfindung betrifft eine Nachtsichteinrichtung für Fahrzeuge nach dem Oberbegriff des Patentanspruchs 1.

Aus der EP 1 026 034 A2 ist eine gattungsgemäße Nachtsichteinrichtung für Fahrzeuge bekannt, die einen am Fahrzeug angebrachten, für infrarote Strahlung empfindlichen Detektor aufweist. Der Detektor kann als Infrarot-Fotodiode ausgebildet sein, die die aus dem Fahrzeugumfeld empfangene infrarote Strahlung in ein elektrisches Signal umwandelt. Das elektrische Signal wird einer Steuereinheit zugeführt, die das elektrische Signal derart aufbereitet, dass es in einer nachgeordneten und in einem Sichtbereich des Fahrzeugführers angeordneten Anzeigeeinheit zur Darstellung eines Bildes des Fahrzeugumfeldes dient. Hierdurch kann eine Ausleuchtung eines über den Sichtbereich eines Abblendlichtes und/oder eines Fernlichtes hinausgehenden Sichtbereiches erfolgen.

Für eine Nachtsichteinrichtung ist ein CCD-Kamerasystem (Charge Coupled Devices/ladungsgekoppeltes Bauelement-Kamerasystem) geeignet. In einem solchen CCD-Kamerasystem wird die auf einen Detektor auffallende Strahlung in eine zur Beleuchtungsstärke proportionale Ladungsmenge umgewandelt. Das Auslesen der angesammelten Ladungspakete erfolgt längs einer Kette von MOS-Kondensatoren zu einer Auslesestufe. Die Auslesestufe wandelt dann die Ladungspakete in ein Spannungssignal um, das zur Beleuchtungsstärke bzw. zur Ladungsmenge des Ladungspaketes proportional ist. Bei solchen CCD-Kameras kann es infolge von Sonneneinstrahlung oder durch Fahrlicht entgegenkommender Fahrzeuge zu einer Übersteuerung des Bildaufnehmers kommen. In diesem Fall blüht bei der Wiedergabe in der Anzeigeeinheit der aufgenommene Lichtfleck nach allen Seiten auf, was als "blooming" bezeichnet wird, oder über eine gesamte Spalte auf, was als "smearing" bezeichnet wird. Eine Auswertung der Bildinformationen für den Fahrzeugführer ist dann nicht mehr Anmelder: Hella KG Hueck & Co. gegeben. Zur Abhilfe dieser unerwünschten Übersteuerungen ist es bekannt, eine Anpassung der Blende bzw. der Belichtungszeit an die aktuellen Lichtverhältnisse herbeizuführen. Aufgrund der Trägheit dieses Systems können jedoch stets kurzzeitige Übersteuerungen auftreten. Darüber hinaus erfolgt durch eine Anpassung der Blende bzw. der Belichtungszeit an die stärkste, von der Kamera wahrgenommenen Strahlungsquelle eine unzureichende Detektion von Objekten mit niedriger Strahlungsdichte.

Es ist auch bekannt, eine Überblendung der Kamera durch einen Infrarot-Bandpassfilter zum Absorbieren des Strahlungsanteils im Wellenlängenbereich des sichtbaren Lichtes vor der Kamera zu verhindern. Die oben beschriebenen Nachtsichteinrichtungen für Fahrzeuge haben jeweils den Nachteil, dass zusätzliche Maßnahmen getroffen werden müssen, um Überblendungen des aufgenommenen Bildes zu vermeiden.

Aus der US 5 949 331 A ist eine Rückansichteinrichtung für Fahrzeuge bekannt, die mehrere Bilddetektoren zur Erfassung eines rückseitig und seitlich des Fahrzeugs angeordneten Umfeldbereiches aufweist. Die von den Detektoren bereitgestellten Signale werden in einer Steuereinheit aufbereitet und einer Anzeigeeinheit des Fahrzeugs zugeführt. Die Detektoren sind als CMOS-Bildsensoren ausgebildet und ermöglichen in der Anzeigeeinheit die Darstellung einer Videosequenz des rückseitigen bzw. seitlichen Fahrzeugumfeldes. Die Rückansichteinrichtung kann in bekannte Nachtsichteinrichtungen integriert werden.

Aufgabe der vorliegenden Erfindung ist es, eine Nachtsichteinrichtung für Fahrzeuge derart weiterzubilden, dass keine zusätzlichen Maßnahmen erforderlich sind, um das Auftreten von Überblendungen zu verhindern und der Nutzer zu jedem Zeitpunkt den vollen Bildinhalt zur Verfügung gestellt bekommt.

Zur Lösung dieser weist die Erfindung die Merkmale des Patenanspruchs 1 auf.

Die erfindungsgemäße Nachtsichteinrichtung ermöglicht, dass die Verwendung von CMOS-Bildsensoren eine Bildverarbeitung in einem großen Dynamikbereich ohne zusätzliche Maßnahmen, wie beispielsweise Belichtungs- und Blendenregelung, zur Vermeidung von Übersteuerungen verarbeitet werden kann. Es sind vorteilhaft keine beweglichen Blenden oder eine Blendenregelung erforderlich. Erfindungsgemäß wird der Detektor durch hochdynamische CMOS-Bildsensoren gebildet, die eine Umwandlung der infraroten Strahlung in einen besonders großen Dynamikbereich ermöglicht. Dies wirkt sich positiv bei Blendung durch Scheinwerfer entgegenkommender Fahrzeuge bei Dunkelheit aus. Es wird eine gute Auswertung des Bildes gewährleistet. Der Dynamikbereich umfasst sechs Zehnerpotenzen.

Nach einer bevorzugten Ausführungsform weist die Steuereinheit eine Signalanpassungseinheit auf, die aus einem digitalen Signalprozessor oder programmierbaren Logikanordnungen (PLDs) besteht. Bei Verwendung von mehrmalig programmierbaren Logikanordnungen wie FPGAs (Field Programmable Gate Arrays) wird eine hohe Komplexität erzielt, die eine umfangreichere Weiterverarbeitung ermöglicht.

Ein Vorteil der Erfindung besteht darin, dass keine weitere Signalverarbeitung notwendig ist. Es ist lediglich eine Generierung eines Videosignals erforderlich, das in der oder für die Anzeigeeinheit angepasst wird.

In Abhängigkeit von der Form der Bildsensor-Umwandlungskennlinie erfolgt in der Signalanpassungseinheit eine Exponenzierung, Signalspreizung und/oder Datenkompression.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: ein Blockschaltbild einer Nachtsichteinrichtung und
- Figur 2: eine Bildsensor-Umwandlungskennlinie.

Eine Nachtsichteinrichtung 1 für Fahrzeuge F besteht im Wesentlichen aus einem Infrarot-Scheinwerfer 8, einer infrarotempfindlichen Kamera 2, einer Steuereinheit 3 sowie einer Anzeigeeinheit 4. Die Infrarot-Kamera 2 ist mit ihrer Optik 2' in Fahrtrichtung orientiert und im Bereich einer Fahrzeugaußenhaut, beispielsweise am Dach des Kraftfahrzeuges F, angeordnet.

Der Infrarot-Scheinwerfer 8 ist als Infrarotstrahler ausgebildet, der im Bereich des Daches oder eines Scheinwerfers angeordnet sein kann. Der Infrarotstrahler sendet eine Infrarotstrahlung in einem Wellenlängenbereich zwischen 780nm und 1200nm aus. Der Infrarotstrahler kann als auf einem Träger angeordnete Anzahl von Laserdioden oder Leuchtdioden ausgebildet sein.

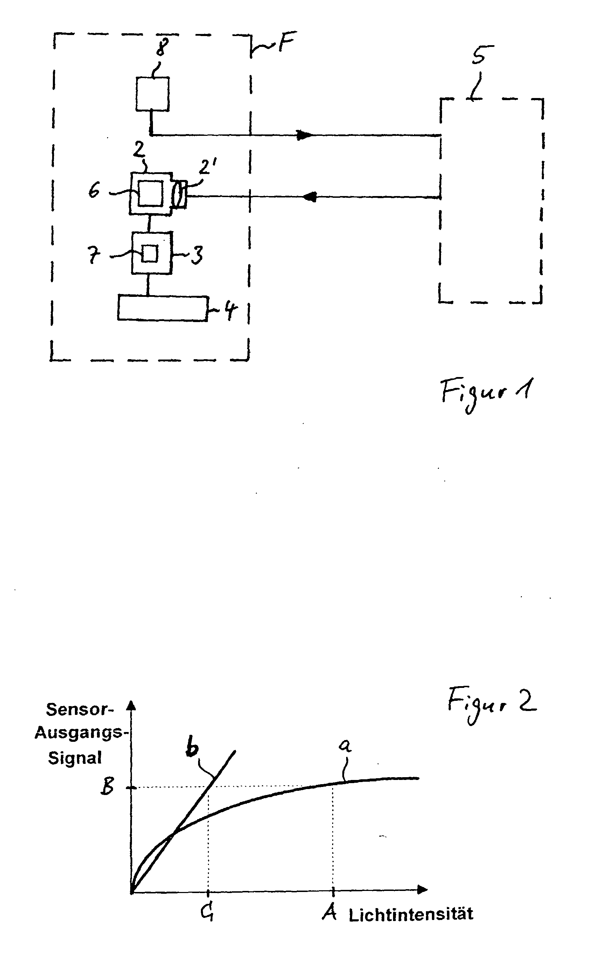

Erfindungsgemäß weist die Infrarot-Kamera 2 zur Detektion von Infrarotbildern im Bereich eines vor dem Fahrzeug F liegenden Fahrzeugumfeldes 5 einen oder mehrere CMOS-Bildsensoren 6 auf (Complementary Metal Oxide Semiconductor-Bildsensor). Sie ermöglichen die Aufnahme eines großen Strahlungsintensitätsbereiches, wie aus der Figur 2 durch Darstellung einer lungsintensitätsbereiches, wie aus der Figur 2 durch Darstellung einer logarithmischen Umwandlungskennlinie ersichtlich ist.

Die in Figur 2 dargestellte Umwandlungskennlinie a des CMOS-Bildsensors 6 überstreicht einen Strahlungsintensitätsbereich von A, der im Vergleich zu einem Strahlungsintensitätsbereich C, der von einem CCD-basierten Bildsensor gemäß linearer Umwandlungskennlinie b überstrichen wird, mehr um das doppelte größer ist. Hierdurch ergibt sich ein wesentlich größerer Aussteuerbereich, der das Umwandeln und Auswerten von hohen Strahlungsintensitäten ermöglicht. Vorzugsweise ist der Bildsensor 6 durch hochdynamische CMOS-Bausteine gebildet, die einen besonders hohen Dynamikbereich aufweisen.

Der CMOS-Bildsensor 6 kann eine logarithmische Kennlinie a gemäß Figur 2 aufweisen. Alternativ kann die Umwandlungskennlinie auch linear verlaufen, wobei das maximale elektrische Ausgangssignal E stets im Bereich der Strahlungsintensität A erreicht wird.

Die CMOS-Bildsensoren 6 sind auf einem im Wesentlichen senkrecht zur Fahrtrichtung angeordneten, nicht dargestellten Träger in einer Mehrzahl und matrixartig angeordnet. Die Steuereinheit 3 zur Weiterverarbeitung der vom Bildsensor 6 gelieferten elektrischen Signale kann in der Kamera 2 integriert sein. Alternativ kann die Steuereinheit 3 auch im Steuergerät des Kraftfahrzeuges F integriert sein. Zu diesem Zweck sind zwischen der Kamera 2 und der Steuereinheit 3 elektrische Zuführungen angeordnet. Die Steuereinheit 3 weist eine Signalanpassungseinheit 7 auf, in der eine Anpassung der elektrischen Signale an die Anzeigeeinheit 4 erfolgt. Ferner kann eine Signalverarbeitung erfolgen, wie beispielsweise eine Exponentzierung, eine Signalspreizung oder eine Datenkompression der vorliegenden elektrischen Signale. Zur vereinfachten Bildverarbeitung weist die Signalanpassungseinheit 7 einen Signalprozessor oder programmierbare Logikanordnungen (PLDs) wie beispielsweise FPGAs (Field Programmable Gate Arrays) auf.

Die so aufbereiteten Signale werden dann der Anzeigeeinheit 4 zur Verfügung gestellt, die das von der Kamera 2 aufgenommene Bild in einer Schwarz-Weiß-Abbildung auf ein Display in der Instrumententafel umsetzt. Alternativ kann das Bild auch auf ein im Bereich der Windschutzscheibe angeordnetes Head-Up-Display projiziert werden.

Die Nachtsichteinrichtung 1 ist vorzugsweise im Scheinwerferbereich des Fahrzeugs F angeordnet. Der Scheinwerfer kann den Infrarot-Scheinwerfer 8 aufweisen, der die Infrarotstrahlung in einem Bereich bis 200 m vor dem Fahrzeug F aussendet. Alternativ kann die Infrarotstrahlung auch aus dem eigentlichen Scheinwerfer generiert werden, wobei die Infrarotstrahlung mittels geeigneter Filter, siehe beispielsweise DE 39 32 216 C2, erzeugt wird. Der Infrarot-Scheinwerfer 8 ist vorzugsweise als Laserscheinwerfer mit einem Infrarotstrahlung aussendenden Laser ausgebildet.

## Patentansprüche

1. Nachtsichteinrichtung für Fahrzeuge mit einem am Fahrzeug angeordneten und für infrarote Strahlung empfindlichen Detektor (6), in dem die an einem Fahrzeugumfeld empfangene infrarote Strahlung in eine zur Bestrahlungsstärke in Beziehung stehendes elektrisches Signal umgewandelt wird, mit einer Steuereinheit (3) zur Aufbereitung des elektrischen Signals und mit einer der Steuereinheit (3) nachgeordneten Anzeigeeinheit (4) zur Darstellung eines Infrarotbildes des Fahrzeugumfeldes, **dadurch gekennzeichnet, dass** der Detektor als ein CMOS-Bildsensor (6) ausgebildet ist, dass die Nachtsichteinrichtung einen Infrarot-Scheinwerfer (8) aufweist, der zumindest Strahlung im infraroten Spektralbereich in einem für Fernlicht ähnlichen Sichtbereich aussendet und dass der CMOS-Bildsensor (6) nach einer logarithmischen oder linearen Beleuchtungsstärke-Umwandlungskennlinie arbeitet, derart, dass der Dynamikbereich des CMOS-Bildsensors (6) sechs Zehnerpotenzen umfasst.

2. Nachtsichteinrichtung nach Anspruch 1, **dadurch gekennzeichnet, dass** die Steuereinheit (3) eine Signalanpassungseinheit (7) umfasst, in der eine Dynamikanpassung an die Anzeigeeinheit (4) erfolgt.

3. Nachtsichteinrichtung nach Anspruch 2, **dadurch gekennzeichnet, dass** die Signalanpassungseinheit (7) einen digitalen Signalprozessor oder einen programmierbaren Logikbaustein (PLD, FPGA) umfasst.

4. Nachtsichteinrichtung nach einem der Ansprüche 2 bis 3, **dadurch gekennzeichnet, dass** die Signalanpassungseinheit (7) in einer dem CMOS-Bildsensor (6) enthaltenden Infrarot-Kamera (2) integriert ist.

5. Nachtsichteinrichtung nach einem der Ansprüche 1 bis 4, **dadurch gekennzeichnet, dass** der Infrarot-Scheinwerfer (8) als Laserscheinwerfer ausgebildet ist.

6. Nachtsichteinrichtung nach einem der Ansprüche 1 bis 5, **dadurch gekennzeichnet, dass** eine Mehrzahl von matrixartig angeordneten CMOS-Bildsensoren (6) vorgesehen sind, die in Fahrtrichtung des Fahrzeuges (F) ausgerichtet sind.

7. Nachtsichteinrichtung nach einem der Ansprüche 1 bis 6, **dadurch gekennzeichnet, dass** die CMOS-Bildsensoren (6) in einem Dachbereich des Fahrzeuges (F) angeordnet sind.

## Claims

1. Night vision device for vehicles with an infrared light detector (6) attached to a vehicle and designed to convert the infrared radiation picked up from a vehicle environment into an electrical signal reflecting its reference to the irradiance, with an electronic control unit (3) for processing the electrical signal, and with a display unit (4) located downstream the electronic control unit (3) for displaying an infrared image of the vehicle environment, wherein the detector is designed as a CMOS image sensor (6), that the night vision device features an infrared headlamp (8) which emits at least radiation in the infrared spectrum in a visual range similar to that of a high beam, and that the CMOS image sensor (6) works on the basis of a logarithmic or linear illuminance conversion characteristic such that the dynamic range of the CMOS image sensor (6) covers a range of six to the power of ten.

2. Night vision device as in claim 1, wherein the electronic control unit (3) includes a signal matching unit (7) which dynamically matches the signal to the display unit (4).

3. Night vision device as in claim 2, wherein the signal matching unit (7) features a digital signal processor or a programmable logic device (PLD, FPGA).

4. Night vision device as in one of claims 2 to 3, wherein the signal matching unit (7) resides in an infrared camera (2) containing the CMOS image sensor (6).

5. Night vision device as in one of claims 1 to 4, wherein the infrared headlamp (8) is designed as a laser headlamp.

6. Night vision device as in one of claims 1 to 5, wherein a plurality of CMOS image sensors (6) are arranged in a matrix pointing in the vehicle's traveling direction (F).

7. Night vision device as in one of claims 1 to 6, wherein the CMOS image sensors (6) are located somewhere in the roof of the vehicle (F).

## Revendications

1. Dispositif de vision nocturne pour véhicules avec un détecteur (6) fixé au véhicule et sensible au rayonnement infrarouge, dans lequel le rayonnement infrarouge reçu dans l'environnement du véhicule est transformé en un signal électrique étant en relation avec l'intensité d'irradiation, avec une unité de commande (3) permettant le traitement du signal électrique et avec une unité d'affichage (4) montée en aval de l'unité de commande (3) et permettant la visualisation d'une image infrarouge de l'environnement du véhicule, **caractérisé en ce que** le détecteur est conçu comme un détecteur d'image CMOS (6), **en ce que** le dispositif de vision nocturne présente un projecteur infrarouge (8) qui émet au moins un rayonnement dans le domaine spectral infrarouge similaire au champ de vision de l'éclairage route, et **en ce que** le capteur d'image CMOS (6) fonctionne selon une courbe de transformation d'intensité lumineuse logarithmique ou linéaire, de telle sorte que la plage dynamique du capteur d'image CMOS (6) comprend six puissances de dix.

2. Dispositif de vision nocturne selon la revendication 1, **caractérisé en ce que** l'unité de commande (3) comprend une unité d'adaptation de signal (7) dans laquelle s'effectue une adaptation dynamique à l'unité d'affichage (4).

3. Dispositif de vision nocturne selon la revendication 2, **caractérisé en ce que** l'unité d'adaptation de signal (7) comprend un processeur de signal numérique ou un composant logique programmable (PLD, FPGA).

4. Dispositif de vision nocturne selon l'une quelconque des revendications 2 à 3, **caractérisé en ce que** l'unité d'adaptation de signal (7) est intégrée dans une caméra infrarouge (2) incluant le capteur d'image CMOS (6).

5. Dispositif de vision nocturne selon l'une quelconque des revendications 1 à 4, **caractérisé en ce que** le projecteur infrarouge (8) est conçu sous forme de projecteur laser.

6. Dispositif de vision nocturne selon l'une quelconque des revendications 1 à 5, **caractérisé en ce qu'**il est prévu une pluralité de capteurs d'image CMOS (6) disposés en forme de matrice, qui sont orientés dans le sens de marche du véhicule (F).

7. Dispositif de vision nocturne selon l'une quelconque des revendications 1 à 6, **caractérisé en ce que** les capteurs d'image CMOS (6) sont disposés dans une zone du pavillon du véhicule (F).
